# EUROPEAN PATENT SPECIFICATION

(11) **EP 2 046 085 B1**
(45) Date of publication and mention of the grant of the patent: **09.03.2011**
(21) Application number: 08165792.6
(22) Date of filing: 02.10.2008
(51) Int. Cl.: H04W 60/00

(54) **Improvements for idle state signalling in telecommunications networks**
Verbesserungen der Idle State Signalisierung in Telekommunikationsnetzen
Améliorations de la signalisation d'attende dans les réseaux de télécommunication

(30) Priority: 02.10.2007 GB 0719207
(43) Date of publication of application: 08.04.2009
(73) Proprietor: Vodafone Group PLC, Newbury Berkshire RG14 2FN (GB)
(72) Inventor: Pudney, Christopher, Newbury, Berkshire RG20 9EZ (GB)
(74) Representative: Keston, David Arthur

(56) References cited:
- 3GPP (3RD GENERATION PARTNERSHIP PROJECT): "GPRS enhancements for E-UTRAN access (Release 8)" 3GPP TS 23.401 V1.2.1 (CHAPTER 5.3.3), September 2007 (2007-09), pages 1,30-43, XP002512727 Sophia Antipolis
- ZTE: "S2-073506: Idle mode Signalling Reduction description" 3GPP SA2 MEETING #59, 27 August 2007 (2007-08-27), - 31 August 2007 (2007-08-31) pages 1-1, XP002512726 Helsinki, Finland
- VODAFONE: "S2-074421: Further aspects of Idle State signalling optimisation" 3GPP SA2 MEETING #60, [Online] 8 October 2007 (2007-10-08), - 12 October 2007 (2007-10-12) pages 1-2, XP002512725 Kobe, Japan Retrieved from the Internet: URL:www.3gpp.org> [retrieved on 2009-01-30]

## Description

The present invention relates to a cellular telecommunications network having more than one Radio Access Technology (RAT). In particular, the invention relates to improvements in idle state signalling optimisation between "long term evolution" bearer technology (LTE - a so-called 4G technology) and 2G/3G bearer technologies (such as GSM and UMTS).

To receive a new call, a mobile terminal (or user equipment, UE) needs to be registered in a paging area with the network. The terminal maintains this registration through idle state signalling.

Under GSM (and UMTS) standards, location registration signalling at cell boundaries is performed by storing a current Location Area (LA) value, (or, for UMTS, Routeing Area (RA) value) - this value is associated with a particular cell and thus a respective base station (node B). In idle state, the terminal checks at cell change whether the new cell is still associated with the stored LA/RA - if there has been a change of value the terminal is forced to carry out a location/routing area update (LAU/RAU).

Currently the LTE system has the ability to allow or disallow access of idle state UEs to the system based on the concept of the Tracking Area (TA). Cells are in this case grouped into clusters (containing of the order of 100 cells), with each cluster being given a TA Identity. A UE is either Accepted or Rejected into one or a collection of TAs by a mobility management entity (MME - the LTE analogue to the SGSN in 3G) when the UE performs the TA Update procedure.

When the UE connects (via LTE bearer technology) to an e-node B (eNB) it enters RRC Connected state, which requires the security procedures to be triggered between the UE and the radio access network. Whilst the UE remains in RRC Connected state, the eNB is in control of the UE mobility. Whilst in RRC Connected state the eNB stores the UE context for that UE, which is generated from information provided from the UE and from the MME. When the UE moves to RRC Idle state the eNB discards the UE context information.

In idle mode, it will be common that the UE has several evolved packet system (EPS) bearers/primary and secondary PDP contexts active.

These different (LTE, 3G & 2G) contexts could be activated when the UE attaches to LTE. Then the UE moves to LTE-IDLE and then subsequently moves onto its first 2G/3G cell. This should cause a Routeing Area update (RAU) to occur, which will in turn move the session management state from the MME to the SGSN. The session management state includes the S-GW/P-GW/GGSN address.

Update mechanisms (E-UTRAN/UTRAN) of the prior art are inter-alia disclosed in 3GPP TS 23.401.

In circumstances when the UE enters active mode, modifies its session management/EPS bearer state and returns to idle mode, then a simple procedure would be that the UE performs an RA update/TA update at the next idle mode RAT change.

However, short voice calls and/or push to talk over cellular (PoC) sessions on one RAT might frequently involve the establishment of dedicated bearers that are released before returning to idle. The RAU or TAU at next idle mode RAT change would then be strictly superfluous.

It is an object of the invention to address the issues set out above.

In accordance with the present invention there is provided a method for reducing signalling between a mobile terminal and a cellular communications network having at least a first bearer technology and a second bearer technology, the method comprising, in the mobile terminal:
a) performing an initial location registration event between the mobile terminal and the cellular communications network;
b) storing idle mode session management state data when the terminal enters a state in which the terminal is simultaneously registered with the network over the first and second bearer technologies;
c) when the active bearer technology is changed from the first bearer technology to the second bearer technology, determining the current idle mode session management state data and comparing the stored session management state data to the current session management state data; and
d) if the stored session management state data and current session management state data are different, triggering a further location registration event.

Preferably, the step of performing an initial location registration event comprises at least: performing a first location registration from the mobile terminal to the first bearer technology; and performing a second location registration from the mobile terminal to the second bearer technology, the first location registration and second location registration being substantially independent of each other.

Advantageously, the session management state data includes information corresponding to at least one of the following parameters: APNs, NSAPIs, destination IP address(es), source IP address(es), downlink TFTs, uplink TFTs or QCIs.

Alternatively the method may further comprise the step of calculating a checksum from information corresponding to the session management state, wherein the step of determining the current session management state data includes calculating a current checksum from information corresponding to the current session management state.

In this context the stored session management state data and current session management state data may conveniently both be checksums.

If the stored session management state data and current session management state data are identical, the method preferably includes providing an indication that a further location registration event is unnecessary, thereby overriding the conventional response to any session management state changes made since the most recent location registration event.

After a further location registration event has been triggered, the method preferably comprises repeating steps b) to d) respectively. The current session management state data determined in the first iteration of step c) will then become the stored session management state data in the second iteration of step b).

In accordance with a further aspect of the invention there is provided a mobile terminal arranged to operate in accordance with the method set out above.

In accordance with yet a further aspect of the invention there is provided a cellular telecommunications network comprising a mobile terminal arranged to perform the method steps set out above.

There are a number of sets of subscriber data/context in MME and SGSN for which the question of synchronisation must be considered if unnecessary idle state signalling is to be avoided: security contexts; subscriber data; "implicitly detached state" data; and, of most interest to the invention, session management bearer state data.

Given the agreement on the SGSN and MME performing separate registrations with the HSS, the "idle mode" security contexts in MME and SGSN will be independent. Consequently, there is no need for procedures to synchronise these.

At handover/relocation, it is believed that the source core network (CN) node will supply the 'base' security parameters to be used in LTE_active/RRC_connected mode following the handover. It is assumed that these security parameters are used until the UE moves to idle mode, or, the (new) CN performs an Authentication and Key Agreement (AKA) AND security mode setting procedure: AKA is the security protocol used in UMTS.

Depending upon the Radio Access Technology (RAT), there are a number of subscriber data parameters which might be considered for synchronisation: for instance QoS Profile, SMS barring, or Trace. Not all parameters are needed by both MME (LTE) and SGSN (2G/3G). For example, Trace might only be active on one RAT.

The QoS profiles might also be different on the different RATs (eg maximum bit rate).

These types of subscriber data are may indeed not need to be synchronized between MME and SGSN. Instead it is assumed that the HSS downloads a consistent set of data to MME and SGSN.

The term "implicitly detached state" deserves a little explanation. If the mobile is using (either in active mode or idle mode) one RAT for a long period, then the "periodic routeing area timer" will expire in the other RAT and (as agreed in S2-073797) functionality is needed to ensure that the MME/SGSN does not delete the EPS bearers/PDP contexts in the S-GW/GGSN. This may be achieved by signalling between MME and SGSN.

When the SGSN (or MME) determines that the UE has been inactive for a very long period (eg twice the PRU timer) in that RAT, it signals this fact to the MME (or SGSN). When the MME (or SGSN) also determines that the UE is very inactive, then the MME(or SGSN) can delete the UE's context from the Serving and PDN Gateways AND inform the SGSN (or MME) that this deletion has been done.

If the mobile returns to the first RAT, then that RAT's CN node signals to its peer CN node that the mobile has returned.

Conveniently, in situations of long inactivity from a UE in one RAT, the above signalling mechanisms are used to avoid premature deletion of the PDP contexts/EPS bearers in the S-GW/P-GW/GGSN.

Synchronisation of session management/evolved packet system (EPS) bearer state presents the most significant challenge to the optimisation of idle state signalling. In idle mode, it will be common that the UE has several EPS bearers/primary and secondary PDP contexts active.

These different contexts could be activated when the UE attaches to LTE. Then the UE moves to LTE-IDLE and later on moves to its first 2G/3G cell. This should cause a Routeing Area update (RAU) to occur, and this can move the Session Management state from the MME to the SGSN. The session management state includes the S-GW/P-GW/GGSN address.

Conveniently, the evolved packet core (EPC) is notified that this is an Idle Mode Signalling Reduction (ISR) Routeing Area (RA) update, and hence instructed not to delete the 'bearer state information' from the 'old' MME/SGSN.

Advantageously, a request to activate ISR should be signalled in the Context Request message sent from the SGSN (or MME) to the MME (or SGSN). Acceptance (or not) of the ISR request should be indicated in the Context response. Both MME and SGSN then store their "ISR peer's IP address".

At MME-MME change, the new MME's IP address may be made known to the 'old SGSN'. To reduce the number of network interfaces, it is contemplated that the new MME indicates in the TAU accept message, that the UE needs to perform an RAU the next time that it moves to 2G/3G. A similar procedure applies for SGSG-SGSN change.

If the UE enters active mode, modifies its session management/EPS bearer state and returns to idle mode, then a simple procedure would be that the UE performs an RA update/TA update at the next idle mode RAT change.

However, short voice calls and/or PoC sessions on one RAT might frequently involve the establishment of dedicated bearers that are released before returning to idle. Hence greater signalling reduction could be obtained if the UE stored its "idle mode session management state" (e.g. active PDP contexts/EPS bearers; their TFTs; their NSAPIs/EPS bearer IDs, etc.); checked for changes when next returning to idle and only performed the inter-RAT RA update if there is a change to the "idle mode session management state".

Preferably, if the "idle mode session management state" changes, then the UE performs a TA/RA update at the next inter-RAT change.

In one embodiment, upon entry into ISR active state, the UE stores information to describe its "session management state at entry into ISR active". This session management state information includes some or all of the following parameters: APNs, NSAPIs, destination and source IP addresses, DL-TFTs and/or UL-TFTs, QCIs etc. The mobile may then activate, deactivate and modify bearers, e.g. activation and reason of guaranteed bit rate bearers for a speech call.

At each subsequent RAT change between LTE and 2G/3G, the mobile compares its current session management state information with the "session management state at entry into ISR active". If they are different, then the mobile needs to perform an RAU (if entering 2G/3G) or TA update (TAU) (if entering E-UTRAN). If the bearer context information is the same, then previous changes to the bearer context information do not cause an RAU or TAU (although the mobile might still perform a RAU/TAU for other reasons, such as movement into a new Routeing Area). If there is no RAU/TAU, the mobile remains in ISR active state.

In an alternative embodiment, upon entry into the ISR active state, the mobile computes and stores a checksum from the "session management state at entry into ISR active". At subsequent inter-RAT changes, the mobile calculates a check sum of the current session management state. If the checksums differ, then a RAU or TAU is needed. If the checksums are the same, then this does not trigger the mobile to perform an RAU/TAU.

As will be apparent from the preceding discussion, support for ISR would be essential for any LTE mobile terminal that also supports 2G and/or 3G. Note that in order to aid inter-operability testing, it may still be necessary for a mobile terminal to signal its support of ISR to the Core Network.

## Claims

1. A method for reducing signalling between a mobile terminal and a cellular communications network having at least a first bearer technology and a second bearer technology, the method comprising, in the mobile terminal:
a) performing an initial location registration event between the mobile terminal and the cellular communications network; **characterised in that**, the method further comprising:
b) storing idle mode session management state data when the terminal enters a state in which the terminal is simultaneously registered with the network over the first and second bearer technologies;
c) when the active bearer technology is changed from the first bearer technology to the second bearer technology, determining the current idle mode session management state data and comparing the stored session management state data to the current session management state data; and
d) if the stored session management state data and current session management state data are different, triggering a further location registration event.

2. A method as claimed in claim 1, wherein the step of performing an initial location registration event comprises at least:
performing a first location registration from the mobile terminal to the first bearer technology;
performing a second location registration from the mobile terminal to the second bearer technology, the first location registration and second location registration being substantially independent of each other.

3. A method as claimed in claim 1 or claim 2, wherein the session management state data includes information corresponding to at least one of the following parameters: APNs, NSAPIs, destination IP address(es), source IP address(es), downlink TFTs, uplink TFTs or QCIs.

4. A method as claimed in claim 1 or claim 2, further comprising the step of calculating a checksum from information corresponding to the session management state, wherein the step of determining the current session management state data includes calculating a current checksum from information corresponding to the current session management state.

5. A method as claimed in claim 4, wherein the stored session management state data and current session management state data are respective checksums.

6. A method as claimed in any one of the preceding claims, further comprising, if the stored session management state data and current session management state data are identical, providing an indication that a further location registration event is unnecessary, thereby overriding the conventional response to any session management state changes made since the most recent location registration event.

7. A method as claimed in any one of claims 1 to 4, wherein after the further location registration event the method further comprises repeating steps b) to d) respectively, the current session management state data determined in the first iteration of step c) becoming the stored session management state data in the second iteration of step b).

8. A mobile terminal comprising means for carrying out the method steps according to any of the preceding claims.

9. A cellular telecommunications network comprising a mobile terminal arranged to perform the method steps according to any of claims 1 to 7.

## Patentansprüche

1. Verfahren zum Reduzieren von Signalisierung zwischen einem mobilen Endgerät und einem zellularen Kommunikationsnetzwerk mit wenigstens einer ersten Trägertechnologie und einer zweiten Trägertechnologie, wobei das Verfahren im mobilen Endgerät Folgendes beinhaltet:
a) Durchführen eines anfänglichen Ortsregistrierungsevents zwischen dem mobilen Endgerät und dem zellularen Kommunikationsnetzwerk;
**dadurch gekennzeichnet, dass** das Verfahren ferner Folgendes beinhaltet:
b) Speichern der Session-Management-Zustandsdaten im Ruhemodus, wenn das Endgerät in einen Zustand eintritt, in dem das Endgerät gleichzeitig über die erste und die zweite Trägertechnologie beim Netzwerk registriert ist;
c) Ermitteln, wenn die aktive Trägertechnologie von der ersten Trägertechnologie auf die zweite Trägertechnologie wechselt, der aktuellen Session-Management-Zustandsdaten im Ruhemodus und Vergleichen der gespeicherten Session-Management-Zustandsdaten mit den aktuellen Session-Management-Zustandsdaten; und
d) Auslösen, wenn sich die gespeicherten Session-Management-Zustandsdaten und die aktuellen Session-Management-Zustandsdaten unterscheiden, eines weiteren Ortsregistrierungsevents.

2. Verfahren nach Anspruch 1, wobei der Schritt des Durchführens eines anfänglichen Ortsregistrierungsevents wenigstens Folgendes beinhaltet:
Durchführen einer ersten Ortsregistrierung vom mobilen Endgerät zur ersten Trägertechnologie;
Durchführen einer zweiten Ortsregistrierung vom mobilen Endgerät zur zweiten Trägertechnologie, wobei die erste Ortsregistrierung und die zweite Ortsregistrierung im Wesentlichen unabhängig voneinander sind.

3. Verfahren nach Anspruch 1 oder Anspruch 2, wobei die Session-Management-Zustandsdaten Informationen beinhalten, die wenigstens einem der folgenden Parameter entsprechen: APNs, NSAPIs, Ziel-IP-Adresse(n), Ursprungs-IP-Adresse(n), Downlink-TFTs, Uplink-TFTs oder QCIs.

4. Verfahren nach Anspruch 1 oder 2, das ferner den Schritt des Berechnens einer Prüfsumme von Informationen beinhaltet, die dem Session-Management-Zustand entsprechen, wobei der Schritt des Ermittelns der aktuellen Session-Management-Zustandsdaten das Berechnen einer aktuellen Prüfsumme von Informationen beinhaltet, die dem aktuellen Session-Management-Zustand entsprechen.

5. Verfahren nach Anspruch 4, wobei die gespeicherten Session-Management-Zustandsdaten und die aktuellen Session-Management-Zustandsdaten jeweilige Prüfsummen sind.

6. Verfahren nach einem der vorherigen Ansprüche, das ferner das Bereitstellen, wenn die gespeicherten Session-Management-Zustandsdaten und die aktuellen Session-Management-Zustandsdaten identisch sind, einer Anzeige beinhaltet, dass ein weiteres Ortsregistrierungsevent unnötig ist, um **dadurch** die konventionelle Reaktion auf Session-Management-Zustandsänderungen zu umgehen, die seit dem letzten Ortsregistrierungsevent vorgenommen wurden.

7. Verfahren nach einem der Ansprüche 1 bis 4, wobei das Verfahren nach dem weiteren Ortsregistrierungsevent das Wiederholen jeweils der Schritte b) bis d) beinhaltet, wobei die bei der ersten Wiederholung von Schritt c) ermittelten aktuellen Session-Management-Zustandsdaten zu den gespeicherten Session-Management-Zustandsdaten in der zweiten Wiederholung von Schritt b) werden.

8. Mobiles Endgerät, das Mittel zum Ausführen der Verfahrensschritte gemäß den vorherigen Ansprüchen umfasst.

9. Zellulares Telekommunikationsnetzwerk, das ein mobiles Endgerät zum Ausführen der Verfahrensschritte nach einem der Ansprüche 1 bis 7 umfasst.

## Revendications

1. Procédé de réduction de la signalisation entre un terminal mobile et un réseau de communications cellulaires possédant au moins une première technologie de support et une deuxième technologie de support, le procédé comprenant, au niveau du terminal mobile, les opérations consistant à :
a) effectuer un événement d'enregistrement de localisation initial entre le terminal mobile et le réseau de communications cellulaires ; **caractérisé en ce que** le procédé comprend en outre :
b) le stockage des données d'état de gestion d'une session en mode de repos lorsque le terminal entre dans un état dans lequel le terminal est simultanément enregistré auprès du réseau par l'intermédiaire des première et deuxième technologies de support ;
c) lorsque la technologie de support active est changée pour passer de la première technologie de support à la deuxième technologie de support, déterminer les données actuelles d'état de gestion de la session en mode de repos et comparer les données stockées d'état de gestion de la session avec les données actuelles d'état de gestion de la session ; et
d) si les données stockées d'état de gestion de la session et les données actuelles d'état de gestion de la session sont différentes, déclencher un événement d'enregistrement de localisation supplémentaire.

2. Procédé selon la revendication 1, l'étape de l'exécution d'un événement d'enregistrement de localisation initial comprenant au moins les étapes consistant à :
effectuer un premier enregistrement de localisation à partir du terminal mobile vers la première technologie de support ;
effectuer un deuxième enregistrement de localisation à partir du terminal mobile vers la deuxième technologie de support, l'enregistrement de la première localisation et l'enregistrement de la deuxième localisation étant sensiblement indépendants l'un de l'autre.

3. Procédé selon la revendication 1 ou la revendication 2, les données d'état de gestion de la session englobant des informations qui correspondent à au moins l'un des paramètres suivants, à savoir : APN, NSAPI, adresse ou adresses IP de destination, adresse ou adresses IP source, TFT en liaison descendante, TFT en liaison montante ou QCI.

4. Procédé selon la revendication 1 ou la revendication 2, comprenant en outre l'étape de calcul d'un total de contrôle à partir des informations qui correspondent à l'état de gestion de la session, cas dans lequel l'étape de détermination des données actuelles d'état de gestion de la session englobe le calcul d'un total de contrôle actuel à partir des informations qui correspondent à l'état actuel de gestion de la session.

5. Procédé selon la revendication 4, les données stockées d'état de gestion de la session et les données actuelles d'état de gestion de la session étant des totaux de contrôle respectifs.

6. Procédé selon l'une quelconque des revendications précédentes, comprenant en outre, si les données stockées d'état de gestion de la session et les données actuelles d'état de gestion de la session sont identiques, l'opération consistant à fournir une indication qu'un événement d'enregistrement de localisation supplémentaire est inutile, ce qui permet d'outrepasser la réaction classique à n'importe quel changement dans l'état de gestion de la session effectué depuis l'événement d'enregistrement de localisation le plus récent.

7. Procédé selon l'une quelconque des revendications 1 à 4, après l'événement d'enregistrement de localisation supplémentaire, le procédé comprenant en outre la répétition des étapes b) à d) respectivement, alors que les données actuelles d'état de gestion de la session déterminées lors de la première itération de l'étape c) deviennent les données stockées d'état de gestion de la session lors de la deuxième itération de l'étape b).

8. Terminal mobile comprenant des moyens destinés à réaliser les étapes du procédé selon l'une quelconque des revendications précédentes.

9. Réseau de télécommunications cellulaires comprenant un terminal mobile qui agencé de façon à exécuter les étapes du procédé selon l'une quelconque des revendications 1 à 7.
